# EUROPÄISCHE PATENTSCHRIFT

(11) **EP 0 854 076 B1**
(45) Veröffentlichungstag und Bekanntmachung des Hinweises auf die Patenterteilung: **29.08.2001**
(21) Anmeldenummer: 97121735.1
(22) Anmeldetag: 10.12.1997
(51) Int. Cl.: B62D 7/18, F16C 11/06

(54) **Verfahren und Vorrichtung zum Einpressen einer vormontierten Kugelgelenk-Patrone in ein Lagerauge eines Lenkerhebels**
Method and device to press a pre-assembled ball joint cartridge into the socket of a steering arm
Procédé et dispositif pour presser la cartouche préassemblée d'un joint à rotule dans le palier d'un arbre de direction

(30) Priorität: 17.01.1997 DE 19701501
(43) Veröffentlichungstag der Anmeldung: 22.07.1998
(73) Patentinhaber: DaimlerChrysler AG, 70567 Stuttgart (DE)
(72) Erfinder: Zivkovic Milorad, 70794 Filderstadt (DE)

(56) Entgegenhaltungen:
- DE-A- 4 445 251
- DE-A- 19 546 233
- US-A- 4 286 363
- US-A- 4 504 166
- US-A- 5 380 114

## Beschreibung

Die Erfindung betrifft ein Verfahren und eine Vorrichtung zum Einpressen einer vormontierten Kugelgelenk-Patrone in ein Lagerauge eines Lenkerhebels nach der im Oberbegriff der Ansprüche 1 und 2 näher definierten Art.

In der DE 44 45 251 A1 ist eine Befestigungsanordnung einer Kugelgelenk-Patrone in einem Lenkerhebel eines Kraftfahrzeuges dargestellt. Der Lenker ist dabei aus Thixocasting, einem Aluminium mit hoher Zähigkeit, hergestellt. Die Aufnahmeöffnung bzw. das Lagerauge in dem Lenkerhebel, in das das Lagergehäuse der Kugelgelenk-Patrone eingesetzt wird, ist dabei nicht bearbeitet. Die vorgefertigte Kugelgelenk-Patrone wird als Einheit in die Aufnahmeöffnung bzw. in das Lagerauge des Lenkerhebels axial eingepreßt.

Zum allgemeinen Stand der Technik wird weiter auf die DE-AS 20 08 935, DE-OS 27 56 228 und die DE-OS 2 111 138 verwiesen.

Der vorliegenden Erfindung liegt die Aufgabe zugrunde ein Verfahren und eine Vorrichtung der eingangs erwähnten Art zum Einpressen einer vormontierten Kugelgelenk-Patrone zu schaffen, durch die der Einpreßvorgang sicher, rationell und einfach vonstatten geht und dennoch eine reibungsoptimierte und spielfreie Lagerung der Lagerkugel nach dem Einpreßvorgang erreicht werden kann. Für das Lagerauge des Lenkerhebels soll dabei im Bedarfsfalle keine vorhergehende Bearbeitung erforderlich sein, es soll vielmehr im Rohzustand verwendet werden können.

Erfindungsgemäß wird diese Aufgabe durch die im kennzeichnenden Teil von Anspruch 1 genannten Verfahrensschritten bzw. durch die im Anspruch 2 genannten Vorrichtungsmerkmale gelöst.

Durch das erfindungsgemäße Verfahren und die Vorrichtung hierzu, läßt sich eine vormontierte Kugelgelenk-Patrone präzise und ohne großen Aufwand in das Lagergehäuse eines Lenkerhebels einpressen. Damit wird eine höhere Prozeßsicherheit und Fertigungsqualität der Gelenke bei der Montage erreicht.

In vorteilhafter Weise läßt sich das Verfahren für Lenker verwenden, die mit einer entsprechenden Elastizität bzw. Zähigkeit versehen sind, die das Einpressen des Lagergehäuses der Kugelgelenk-Patrone ermöglichen. Dies sind z.B. Lenker aus Aluminium oder Aluminiumlegierung, die damit entsprechend unbearbeitet bleiben können.

Vorteilhafte Ausgestaltungen und Weiterbildungen ergeben sich aus den Unteransprüchen und aus dem nachfolgend anhand der Zeichnung prinzipmäßig dargestellten Verfahrensbeispiel.

Es zeigt:
- Fig. 1: eine Vorrichtung zur Durchführung des erfindungsgemäßen Verfahrens in Ausgangsposition;
- Fig. 2: die Vorrichtung nach der Fig. 1, wobei die Einpreßeinrichtung einen Lenkerhebel, in dessen Lagerauge eine Kugelgelenk-Patrone eingepreßt werden soll, zentriert;
- Fig. 3: die Vorrichtung nach der Fig. 1, wobei die Einpreßeinrichtung die Kugelgelenk-Patrone zentriert, und
- Fig. 4: die Vorrichtung nach der Fig. 1, wobei die Einpreßeinrichtung die Kugelgelenk-Patrone vollständig in das Lagerauge einpreßt.

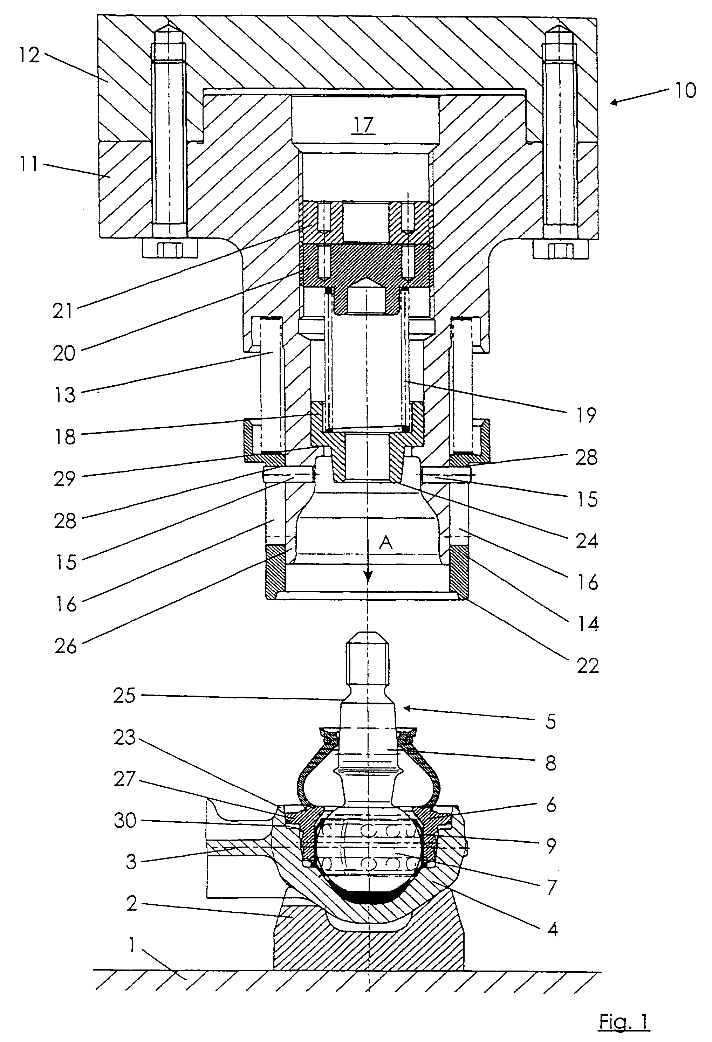

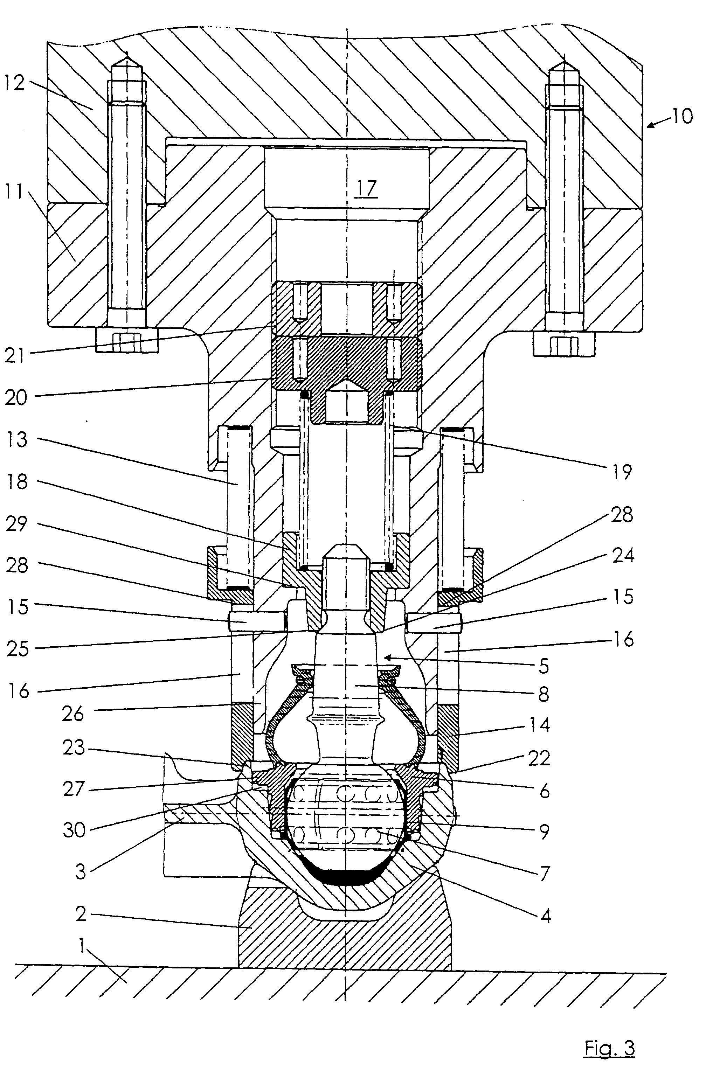

Die in den Figuren 1 bis 4 dargestellte Vorrichtung weist einen Pressentisch 1 auf, auf dem sich eine Aufnahmeeinrichtung 2 befindet. Auf die Aufnahmeeinrichtung 2 wird ein Lenkerhebel 3 aufgesetzt. Ein Lagerauge 4 des Lenkerhebels 3 ist mit seiner Außenkontur an die Innenkontur der Aufnahmeeinrichtung 2, welche räumlich gekrümmt ist, angepaßt. Zum Einpressen einer Kugelgelenk-Patrone in das vorzugsweise unbearbeitete Lagerauge 4 des aus einem Aluminium-Werkstoff bestehenden Lenkerhebels 3, wird diese mit ihrem Lagergehäuse 6 ohne Druck in das Lagerauge 4 des Lenkerhebels 3 eingesetzt. Die Kugelgelenk-Patrone ist als vormontierte Baueinheit ausgebildet mit einem Kugelgelenkbolzen 5 der eine Gelenkkugel 7 und einen daran sich anschließenden mit der Gelenkkugel 7 einstückigen Bolzenschaft 8 aufweist. Eine die Gelenkkugel aufnehmende Lagerschale 9 ist in das Lagergehäuse 6 spielfrei oder axial verschiebbar eingesetzt.

Zum Einpressen der Kugelgelenk-Patrone dient eine Einpreßeinrichtung 10 mit einem Einpreßglied 11, das über eine Schraubverbindung mit einem Basisteil 12 der Einpreßeinrichtung 10 verbunden ist. Das Basisteil 12 kann z.B. eine hydraulische Presse sein. Koaxial zur Längsachse der Einpreßeinrichtung 10 ist über eine Spiralfeder 13 als Federeinrichtung eine Zentrierhülse 14 verbunden. Die Zentrierhülse 14 wird auf dem Einpreßglied 11 axial geführt, wobei durch Führungsstifte 15 eine axiale Wegbegrenzung erreicht wird, die über den Umfang verteilt, vorzugsweise zwei sich diametral gegenüberliegende Stifte, radial nach außen aus dem Einpreßglied 11 herausragen. Mit ihren herausragenden Teilen ragen die Führungsstifte 15 in Axialnuten 16 der Zentrierhülse 14. Die axialen Enden der Axialnuten 16 bilden zusammen mit den Führungsstiften 15 nachfolgend noch näher erläuterte Anschlagglieder für die Wegbegrenzung der Zentrierhülse 14.

Die Führungsstifte 15, welche in den Axialnuten 16 geführt sind, dienen gleichzeitig auch als Verdrehsicherung für die Zentrierhülse 14.

In einer zentralen Innenbohrung 17 des Einpreßgliedes 11 befindet sich ein weiteres Zentrierglied in Form einer Zentrierglocke 18. Die Zentrierglocke 18 ist ebenfalls über eine Spiralfeder 19 als Federeinrichtung axial verschieblich mit dem Einpreßglied 11 verbunden und durch die Bohrungswand der Bohrung 17 koaxial zur Längsachse der Einpreßeinrichtung 10 geführt. Im hinteren, von der Zentrierglocke 18 abgewandten Bereich der Bohrung 17 ist diese als Gewindebohrung ausgeführt, in die eine Einstellmutter 20 zur einstellbaren Weg- und Kraftbegrenzung für die Zentrierglocke 18 eingeschraubt ist. Eine Kontermutter 21 dient zur Fixierung der Einstellmutter 20.

Vor dem Einpreßvorgang liegt die Zentrierhülse 14 mit den hinteren Enden 28 der Axialnuten 16 an den Stiften 15 an, während die Zentrierglocke 18 an einem inneren Absatz 29 der Bohrung 17 anliegt. Auf diese Weise wurden für die Zentrierhülse 14 und die Zentrierglocke 18 Anschlagglieder vor Beginn des Einpreßvorganges gebildet.

Die Vorrichtung zum Einpressen der Kugelgelenk-Patrone in das Lagerauge 4 funktioniert auf folgende Weise:

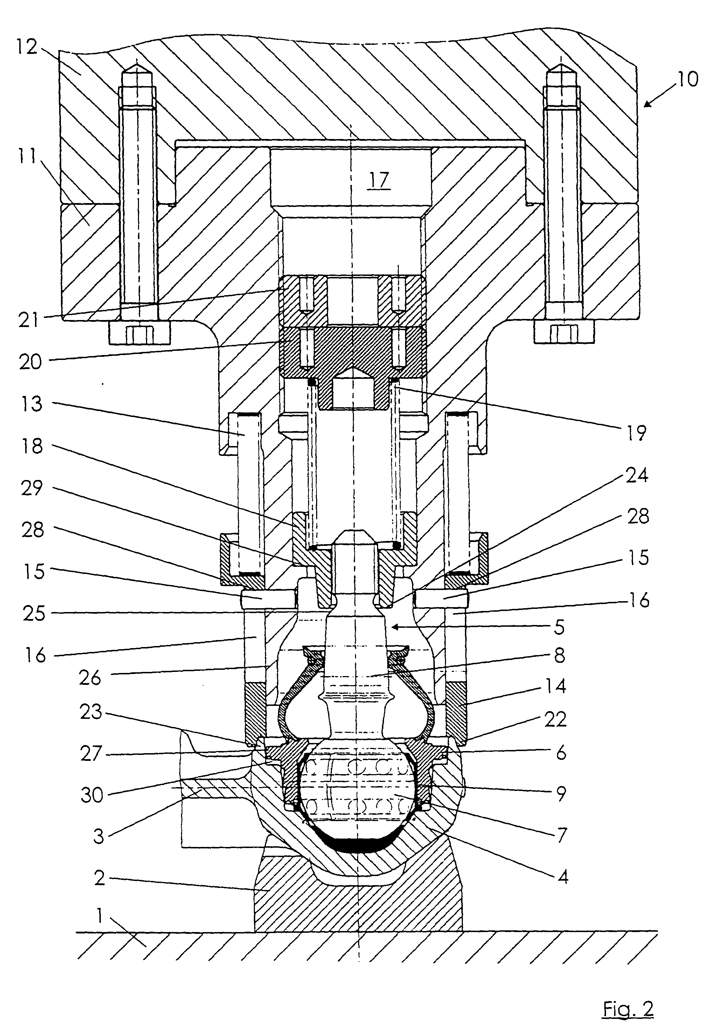

Nachdem die Kugelgelenk-Patrone mit dem Kugelgelenkbolzen 5, wie in der Fig. 1 dargestellt, in das Lagerauge 4 eingesetzt ist, wobei der konische Boden des Lagerauges 4 nur durch den konischen Bereich der Stirnseite der Lagerschale 9 berührt wird, wird die Einpreßeinrichtung 10 in Pfeilrichtung A gesenkt. Dabei trifft zuerst, wie aus der Fig. 2 ersichtlich ist, die Zentrierhülse 14 mit einem stirnseitigen konischen Ansatz 22 auf das stirnseitige freie Ende 23 des Lagerauges 4. Der stirnseitige Ansatz 22 und das stirnseitige Ende 23 des Lagerauges 4 sind in ihren Durchmessern und Ringansätzen einander so angepaßt, daß sich durch das Absenken der Einpreßeinrichtung eine Zentrierung des Lagerauges 4 und damit des Lenkerhebels 3 ergibt, wobei die Federeinrichtung 13 eine entsprechende Vorspannung einstellt und während der weiteren Bewegung der Preßeinrichtung 10 nach unten die Zentrierhülse 14 gegen die Vorspannung der Feder einschiebbar ist.

Während der weiteren Bewegung der Preßeinrichtung 10 in Pfeilrichtung A gelangt nämlich die Zentrierglocke 18 mit einer vorderen konischen Stirnkante 24 an eine Schulter 25 des Bolzenschaftes 8 zur Anlage, wobei der Bolzenschaft 8 mit seinem Endbereich in einer Bohrung der Zentrierglocke 18 geführt ist. Durch das Zusammenwirken der unter Vorspannung 1 seitens der Feder 19 anliegenden Stirnkante 24 und der Schulter 25 wird nunmehr der Kugelgelenkbolzen 5 und die Lagerschale 9 axial zur Längsachse der Einpreßeinrichtung 10 in den Grund des Lagerauges 4 eingedrückt. Auf diese Weise sind nunmehr das Lagerauge 4 und der Kugelgelenkbolzen 5 mit der Gelenkkugel 7 zusammen mit der Lagerschale 9 exakt zueinander zentriert und fixiert, so daß sie beim anschlieβenden Einpreßvorgang sich nicht mehr in ihrer Lage verändern, sondern diese definierte Soll-Lage beibehalten.

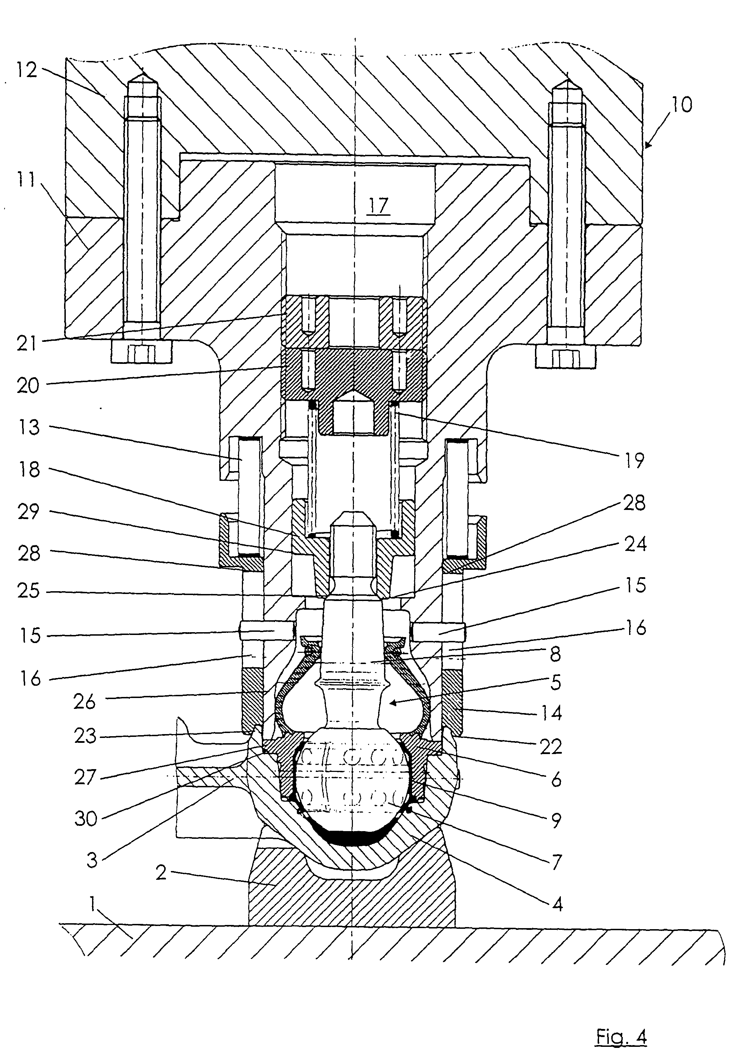

Wie in der Fig. 4 dargestellt, wird nun erst die Einpreßeinrichtung 10 im letzten Schritt noch weiter abgesenkt, wobei das vordere stirnseitige, ringförmige Ende 26 des Einpreßgliedes 11 an einem ringförmigen Absatz 27 des Lagergehäuses 6 zur Anlage kommt. Ein weiteres Absenken der Einpreßeinrichtung 10 bewirkt, daß das Einpreßglied 11 das Lagergehäuse 6 in das Lagerauge 4 einpreßt, wobei das Lagergehäuse 6 mit seinem ringförmigen Absatz auf einem Ringabsatz 30 des Lagerauges 4 zur Anlage kommt.

Nach Beendigung des Einpreßvorganges wird die Einpreßeinrichtung 10 zurückgefahren und es ist lediglich noch erforderlich, das Lagerauge 4 an seinem Ansatz bzw. stirnseitigen Ende 23 nach innen umzubördeln, damit eine Fixierung der Kugelgelenk-Patrone erreicht wird.

Wie ersichtlich, wird die Kugelgelenk-Patrone zwar in einem einzigen Hub, aber in einem mehrstufigen Vorgang in das Lagerauge 4 des Lenkerhebels 3 eingepreßt. Das Lagerauge 4 besitzt dabei bezüglich seines Innendurchmessers ein Untermaß gegenüber dem Außendurchmesser des Lagergehäuses 6, wobei beim Einpreßvorgang aufgrund der geringeren Werkstoff-Festigkeit des Lagerauges 4 im Vergleich zu dem des Lagergehäuses 9 ein Kalibriervorgang des unbearbeiteten Lagerauges stattfindet.

## Patentansprüche

1. Verfahren zum Einpressen einer vormontierten Kugelgelenk-Patrone in ein Lagerauge (4) eines Lenkerhebels (3), wobei die Kugelgelenk-Patrone einen Kugelgelenkbolzen (5), eine die Gelenkkugel (7) umschließende Lagerschale (9) und ein die Lagerschale (9) umschließendes, in das Lagerauge (4) einzupressendes Lagergehäuse (6) aufweist,
**gekennzeichnet durch** folgende Schritte
1.1 der Lenkerhebel (3) mit dem Lagerauge (4) wird auf eine Aufnahmeeinrichtung (2) aufgesetzt, die sich auf einem Pressentisch (1) befindet,
1.2 die Kugelgelenk-Patrone wird mit ihrem Lagergehäuse (6) so in das Lagerauge (4) eingesetzt, daß zunächst nur die Lagerschale (9) im stirnseitigen konischen Bereich in einen entsprechenden Gegenkonus des Lagerauges (4) berührend eingreift, wogegen das Lagergehäuse (6) der Kugelgelenk-Patrone im Lagerauge (4) axial noch Spiel hat,
1.3 das Lagerauge (4) wird koaxial zu einer Einpreßeinrichtung (10) zentriert und achssenkrecht zu ihr ausgerichtet,
1.4 das freie Ende des Bolzenschaftes (8) des Kugelgelenkbolzens (5) wird koaxial zu der Einpreßeinrichtung (10) zentriert und der Bolzenschaft (8) in Einpreßrichtung axial vorgespannt, derart, daß die Lagerschale über den Kugelgelenkbolzen (5) axial im Lagerauge fixiert wird,
1.5 ein Einpreßglied (11) der Einpreßeinrichtung (10) wird auf das Lagergehäuse (6) gedrückt und preßt dieses in das Lagerauge (4) ein.

2. Vorrichtung zum Einpressen einer vormontierten Kugelgelenk-Patrone in ein Lagerauge (4) eines Lenkerhebels (3) mit einer Einpreßeinrichtung (10) mit einem Einpreßglied (11) und mit einem Pressentisch (1), wobei die Kugelgelenk-Patrone einen Kugelgelenkbolzen (5) mit Bolzenschaft (8), eine die Gelenkkugel (7) umschließende Lagerschale (9) und ein die Lagerschale (9) umschließendes, in das Lagerauge (4) einzupressendes Lagergehäuse (6) aufweist,
**dadurch gekennzeichnet, daß**
die Einpreßeinrichtung (10) ein starr mit der Einpreßeinrichtung (10) verbundenes Einpreßglied (11) aufweist, das mit einer Zentrierhülse (14), die axial gegenüber dem Einpreßglied (11) gegen die Kraft einer Feder verschiebbar und auf den Außenrand des in eine auf dem Pressentisch (1) angeordnete Aufnahmeeinrichtung (2) aufgesetzten Lagerauges (4) des Lenkerhebels (3) zentrierend anpreßbar ist, und mit einem Zentrierglied (18) versehen ist, das ebenfalls gegenüber dem Einpreßglied (11) axial gegen die Kraft einer Feder verschiebbar und auf eine Schulter (25) des Bolzenschaftes (8) des Kugelgelenkbolzens (5) aufsetzbar ist, wobei das Einpreßglied (11) auf das Lagergehäuse (6) der Kugelgelenk-Patrone zum Einpressen preßbar ist.

3. Vorrichtung nach Anspruch 2,
**dadurch gekennzeichnet, daß**
die Zentrierhülse (14) und das Zentrierglied (18) jeweils Anschlagglieder (15,18,29) derart aufweisen, daß beim Einpreßvorgang zuerst die Zentrierhülse (14) in Zentrierstellung, dann das Zentrierglied (18) in Zentrierstellung und abschließend das Einpreßglied (11) in Arbeitsstellung gelangt.

4. Vorrichtung nach Anspruch 3
**dadurch gekennzeichnet, daß**
die Anschlagglieder der Zentrierhülse (14) als Führungsstifte (15) ausgebildet sind, die zusätzlich eine Verdrehsicherung bilden.

5. Vorrichtung nach Anspruch 3 oder 4,
**dadurch gekennzeichnet, daß**
das Zentrierglied (18) glockenförmig ausgebildet ist, die an der am Bolzenschaft (8) des Kugelgelenkbolzens (5) angeordneten Schulter (25) angreift.

6. Vorrichtung nach Anspruch 3, 4 oder 5,
**dadurch gekennzeichnet, daß**
die Einpreßglied-seitige Anlageschulter der Vorspannfeder (19) für das axiale Vorspannen des glockenförmigen Zentriergliedes (18) axial durch Einstellglieder (20) einstellbar ist.

## Claims

1. Method for pressing a previously assembled ball joint cartridge into a bearing eye (4) of a steering lever (3), wherein the ball joint cartridge has a ball joint bolt (5), a bearing shell (9) enclosing the joint ball (7) and bearing housing (6) enclosing the bearing shell (9) and which is to be pressed into the bearing eye (4),
characterised by the following stages
1.1 the steering lever (3) with the bearing eye (4) is placed on a receiving device (2), which is situated on a pressing table (1),
1.2 the ball joint cartridge is inserted with its bearing housing (6) into the bearing eye (4) in such a way that first of all only the bearing shell (9) in the front side conical area engages in a contacting way in a corresponding cone of the bearing eye (4), whereas the bearing housing (6) of the ball joint cartridge still has clearance axially in the bearing eye (4),
1.3 the bearing eye (4) is centred coaxially to a pressing device (10) and aligned in an axially vertical way thereto,
1.4 the free end of the bolt shaft (8) of the ball joint bolt (5) is centred coaxially to the pressing device (10) and the bolt shaft (8) is axially pre-stressed in the pressing direction in such a way that the bearing shell is fixed axially in the bearing eye through the ball joint bolt (5),
1.5 a pressing member (11) of the pressing device (10) is pressed onto the bearing housing (6) and presses this into the bearing eye (4).

2. Device for pressing a previously assembled ball joint cartridge into a bearing eye (4) of a steering lever (3) with a pressing device (10) with a pressing member (11) and with a pressing table (1), wherein the ball joint cartridge has a ball joint bolt (5) with a bolt shaft (8), a bearing shell (9) enclosing the joint ball (7) and bearing housing (6) enclosing the bearing shell (9) and which is to be pressed into the bearing eye (4),
**characterised in that**
the pressing device (10) has a pressing member (11) which is rigidly connected with the pressing device (10), wherein the pressing member (11) is provided with a centring sleeve (19), which is movable axially in relation to the pressing member (11) against the force of a spring and can be pressed in a centring way onto the outer edge of the bearing eye (4) of the steering lever (3) placed in a receiving device (2) arranged on the pressing table (1), and with a centring member (18), which is likewise axially movable in relation to the pressing member (11) against the force of a spring and can be placed on a shoulder (25) of the bolt shaft (8) of the ball joint bolt (5), wherein the pressing member (11) can be pressed onto the bearing housing (6) of the ball joint cartridge for the purpose of pressing in.

3. Device according to Claim 2,
**characterised in that**
the centring shell (14) and the centring member (18) have stop members (15, 18, 29) in such a way that during the pressing process first of all the centring sleeve (14) reaches centring position, then the centring member (18) reaches centring position and finally the pressing member (11) reaches working position.

4. Device according to Claim 3,
**characterised in that**
the stop members of the centring sleeve (14) are formed as guide pins (15), which additionally form rotation security.

5. Device according to Claim 3 or 4,
**characterised in that**
the centring member (18) is formed in a bell shape, which engages on the shoulder (25) arranged on the bolt shaft (8) of the ball joint bolt (5).

6. Device according to Claim 3, 4 or 5,
**characterised in that**
the pressing member side position shoulder of the pre-stressed spring (19) can be adjusted for the axial prestressing of the bell-shaped centring member (18) axially through adjusting members (20).

## Revendications

1. Procédé de montage à force d'une cartouche d'articulation sphérique pré-montée dans un oeillet de palier (4), d'un levier d'articulation (3), la cartouche d'articulation sphérique présentant un boulon d'articulation sphérique (5), un coussinet de palier (9), entourant l'articulation sphérique (7), et un boîtier de palier (6), entourant le coussinet de palier (9), à monter à force dans l'oeillet de palier (4),
caractérisé par les étapes suivantes
1.1 le levier d'articulation (3), ayant l'oeillet de palier (4), est monté sur un dispositif support (2) se trouvant sur une table de presse (1).
1.2 la cartouche d'articulation sphérique, avec son boîtier de palier (10), est insérée dans l'oeillet de palier (4), de manière que, d'abord, seule le coussinet de palier (6) s'engage avec mise en contact dans la zone conique frontale, dans un cône conjugué correspondant de l'oeillet de palier (4), alors que, par contre, le boîtier de palier (6) de la cartouche d'articulation sphérique a encore un jeu axial dans l'oeil de palier (4).
1.3 l'oeil de palier (4) est centré coaxialement par rapport au dispositif de montage à force (10) et orienté de façon que son axe soit orienté perpendiculairement par rapport à celui-ci.
1.4 l'extrémité libre de la tige de boulon (8) du point d'articulation sphérique (5) est centrée coaxialement par rapport au dispositif de montage à force (10) et la tige de boulon (8) est précontrainte axialement dans le dispositif de montage à force, de manière que le coussinet de palier soit fixé axialement dans l'oeil de palier, par l'intermédiaire du boulon d'articulation sphérique (5).
1.5 un organe d'enfoncement (11) du dispositif de montage à force (10) est pressé sur le boîtier de palier (6) et presse celui-ci dans l'oeil de palier (4).

2. Dispositif de montage à force d'une cartouche d'articulation sphérique (4) prémontée dans un oeil de palier (4) d'un levier d'articulation (3), avec un dispositif d'enfoncement (10) muni d'un organe d'enfoncement (11) et avec une table de presse (1), la cartouche d'articulation sphérique présentant un boulon d'articulation sphérique (5) munie d'une tige de boulon (8), un coussinet de palier (9) entourant l'articulation sphérique (7) et un boîtier de palier (6) monté à force dans l'oeil de palier (4), entourant le coussinet de palier (9),
**caractérisé en ce que**,
le dispositif d'enfoncement (10) présente un organe d'enfoncement (11) relié rigidement au dispositif d'enfoncement (10), organe d'enfoncement (11) muni d'une douille de centrage (14), déplaçable axialement par rapport à l'organe d'enfoncement (11), à l'encontre de la force d'un ressort, et susceptible d'être pressé avec effet de centrage sur le bord extérieur de l'oeil de palier (4) placé dans un dispositif ou support (2) disposé sur la table de presse (1), et muni d'un organe de centrage (18) susceptible d'être également déplacé axialement par rapport à l'organe d'enfoncement (11), à l'encontre de la force d'un ressort, et susceptible d'être placé sur un épaulement (25) de la tige (8) du boulon d'articulation sphérique (5), l'organe d'enfoncement (11) étant susceptible d'être pressé sur le boîtier de palier (6) de la cartouche d'articulation sphérique afin d'effectuer le montage par pressage.

3. Dispositif selon la revendication 2, **caractérisé en ce que** la douille de centrage (14) et l'organe de centrage (18) présentent chacun des organes de butée (15, 18, 29) respectifs, en ce que, lors du processus d'enfoncement, d'abord la douille de centrage (14) passe en position centrée, puis l'organe de centrage (18) passe en position centrée et, enfin, l'organe d'enfoncement (11) arrive en position de travail.

4. Dispositif selon la revendication 3, **caractérisé en ce que** les organes de butée de la douille de centrage (14) sont réalisés sous la forme de tiges de guidage (15) formant en plus une sécurité empêchant la rotation.

5. Dispositif selon la revendication 3 ou 4, **caractérisé en ce que** l'organe de centrage (18) est réalisé en forme de cloche, s'engageant sur l'épaulement (25) disposé sur la tige (8) du boulon d'articulation sphérique (5).

6. Dispositif selon la revendication 3, 4 ou 5,
**caractérisé en ce que** l'épaulement d'appui situé côté organe d'enfoncement du ressort de précontrainte (19), prévu pour la précontrainte axiale de l'organe de centrage (18) en forme de cloche, est réglable axialement au moyen d'organes de réglage (20).
